# EUROPÄISCHE PATENTANMELDUNG

(11) **EP 3 069 803 A1**
(43) Veröffentlichungstag der Anmeldung: **21.09.2016**
(21) Anmeldenummer: 15188446.7
(22) Anmeldetag: 06.10.2015
(51) Int. Cl.: B22F 3/04, B22F 3/12, B22F 3/10, B22F 3/15, C22C 1/04, C22C 32/00, B22F 5/04, F01D 5/28, F01D 5/02, F01D 5/14, F01D 5/12, F01D 5/30, F01D 25/00, C22C 27/04, B22F 3/105

(54) **SCHAUFEL EINER STRÖMUNGSMASCHINE AUS UNTERSCHIEDLICHEN WERKSTOFFEN UND VERFAHREN ZUR HERSTELLUNG DERSELBEN**

(30) Priorität: 17.03.2015 EP 15159308
(71) Anmelder: MTU Aero Engines AG, 80995 München (DE)
(72) Erfinder: Dr. Smarsly, Wilfried, 81669 München (DE); Fried, Markus, 83626 Valley (DE)

(57) **Zusammenfassung**

Die vorliegende Erfindung betrifft eine Schaufel für eine Strömungsmaschine, insbesondere für ein Flugtriebwerk, mit einem Schaufelfuß (2) zur Anordnung der Schaufel (1) in der Strömungsmaschine und einem Schaufelblatt (3) zur Wechselwirkung mit einem Fluid, welches durch die Strömungsmaschine fließt, wobei Schaufelfuß und Schaufelblatt aus unterschiedlichen Werkstoffen gebildet sind und wobei das Schaufelblatt aus einem Metall - Intermetall - Verbundwerkstoff gebildet ist. Die Metallmatrix, in der intermetallische Phasen zur Bildung des Metall - Intermetall - Verbundwerkstoffs eingelagert sind, ist aus einer Molybdän - Legierung gebildet. Außerdem betrifft die Erfindung ein entsprechendes Verfahren zur Herstellung einer derartigen Schaufel.

## Beschreibung

### HINTERGRUND DER ERFINDUNG

### GEBIET DER ERFINDUNG

Die vorliegende Erfindung betrifft eine Schaufel für eine Strömungsmaschine, insbesondere für ein Flugtriebwerk, sowie ein Verfahren zur Herstellung einer derartigen Schaufel.

### STAND DER TECHNIK

Bei Strömungsmaschinen, wie stationären Gasturbinen oder Flugtriebwerken, müssen die eingesetzten Bauteile abhängig vom Einsatzbereich hohe Anforderungen in verschiedenen Eigenschaftsbereichen erfüllen, wie beispielsweise möglichst geringes Gewicht bei gleichzeitiger hoher Festigkeit und ausreichender Duktilität, Kriechfestigkeit, Hochtemperaturbeständigkeit, Schwingungsfestigkeit usw..

Insbesondere gibt es auch einzelne Bauteile von Strömungsmaschinen, wie beispielsweise Schaufeln, die unterschiedliche und zum Teil gegenläufige Anforderungen bezüglich der Eigenschaften erfüllen müssen. So ist es beispielsweise bei Laufschaufeln von schnelllaufenden Niederdruckturbinen vorteilhaft, wenn der Schaufelfuß, mit dem die Schaufel in einer Turbinenscheibe aufgenommen ist, eine hohe Zugfestigkeit und ein hohes Dehnpotential aufweist, während das Schaufelblatt, welches in Wechselwirkung mit dem Fluid, das durch die Strömungsmaschine strömt, tritt, vor allem eine hohe Oxidationsbeständigkeit und Kriechfestigkeit aufweisen sollte.

Um diese unterschiedlichen Anforderungen gezielt erfüllen zu können, ist es aus dem Stand der Technik bereits bekannt, Schaufelblatt und Schaufelfuß aus unterschiedlichen Werkstoffen zu bilden. So beschreibt beispielsweise die europäische Patentanmeldung EP 1 743 729 A2, eine Schaufel für eine Strömungsmaschine aus Niob - Silizid - Verbindungen herzustellen, bei welchem die Niob - Silizid - Legierung in bestimmten Bereichen der Turbinenschaufel unterschiedlich zu anderen Bereichen der Turbinenschaufel ist.

Allerdings können die in der EP 1 743 729 A2 beschriebenen Niob - Silizid - Legierungen die Anforderungen moderner Strömungsmaschinen und insbesondere von schnelllaufenden Niederdruckturbinen nicht erfüllen, da sie nicht die erforderlichen strukturmechanischen Eigenschaften hinsichtlich Kriechfestigkeit, Zugfestigkeit und Dehnpotential und auch nicht die Anforderungen hinsichtlich der Oxidationsbeständigkeit erfüllen.

### OFFENBARUNG DER ERFINDUNG

### AUFGABE DER ERFINDUNG

Es ist deshalb Aufgabe der vorliegenden Erfindung eine Schaufel für eine Strömungsmaschine und insbesondere für eine schnelllaufende Niederdruckturbine eines Flugtriebwerks bereitzustellen, die den entsprechenden Anforderungen hinsichtlich Zugfestigkeit, Dehnung, Kriechfestigkeit und Oxidationsbeständigkeit genügt. Dabei soll die Schaufel möglichst einfach herstellbar und zuverlässig im Betrieb sein.

### TECHNISCHE LÖSUNG

Diese Aufgabe wird gelöst durch eine Schaufel mit den Merkmalen des Anspruchs 1 sowie einem Herstellungsverfahren mit den Merkmalen des Anspruchs 8. Vorteilhafte Ausgestaltungen sind Gegenstand der abhängigen Ansprüche.

Die Erfindung schlägt eine Schaufel für eine Strömungsmaschine und insbesondere ein Flugtriebwerk vor, bei der der Schaufelfuß zur Anordnung der Schaufel in der Strömungsmaschine, und das Schaufelblatt zur Wechselwirkung mit einem Fluid, das durch die Strömungsmaschine fließt, aus unterschiedlichen Werkstoffen gebildet sind. Insbesondere soll das Schaufelblatt aus einem Metall - Intermetall - Verbundwerkstoff gebildet sein, bei dem die Metallmatrix, in der die intermetallischen Phasen des Metall - Intermetall - Verbundwerkstoffs eingelagert sind, aus einer Molybdän - Legierung gebildet ist. Es hat sich gezeigt, dass durch intermetallische Phasen verstärkte Molybdän - Legierungen insbesondere das Eigenschaftsprofil für ein Schaufelblatt einer entsprechenden Schaufel erfüllen und gleichzeitig die Möglichkeit bieten, in einfacher Weise einen stoffschlüssig verbundenen Schaufelfuß vorzusehen, der ebenfalls die Anforderungen hinsichtlich einer hohen Zugfestigkeit und hohen Duktilität erfüllen kann. Dies kann nämlich in einfacher Weise dadurch erreicht werden, dass ein vergleichbarer Metall - Intermetall - Verbundwerkstoff, wie derjenige, der für das Schaufelblatt Verwendung findet, auch für den Schaufelfuß eingesetzt wird, wobei lediglich der Anteil der intermetallischen Phasen in dem Metall - Intermetall - Verbundwerkstoff im Vergleich zu dem Werkstoff des Schaufelblatts reduziert wird, um so die Zugfestigkeit und das Dehnpotential zu erhöhen. Durch die Verwendung eines ähnlichen Werkstoffs, der ebenfalls eine Molybdän - Legierung als Metallmatrix aufweist, ist eine besonders gute und einfache Anbindung des Schaufelfußes an das Schaufelblatt gewährleistet. Darüber hinaus gibt es jedoch die Möglichkeit den Schaufelfuß auch aus anderen Molybdän - Legierungen ohne Einlagerung von intermetallischen Phasen oder durch Nickel - Legierungen oder Kobalt - Legierungen und insbesondere entsprechende Superlegierungen dieser Legierungen zu bilden. Sowohl Mo - Legierungen als auch Ni - Legierungen und Co - Legierungen bieten eine gute Verbindungsmöglichkeit zu Mo - basierten Metall - Intermetall - Verbundwerkstoffen und stellen geeignete mechanische Eigenschaften für die Bildung eines Schaufelfußes zur Verfügung.

Die intermetallischen Phasen, die in der Molybdän - Legierung des Schaufelblatts und/oder des Schaufelfußes eingelagert sein können, können vorzugsweise Silizide sein, wie Mo₅Si₃ und/oder Mo₅SiB₂ und/oder Mo₃Si.

Die Molybdän - Legierung, die die Metallmatrix für den Metall - Intermetall - Verbundwerkstoff des Schaufelblatts und auch des Schaufelfußes bilden kann, kann neben Molybdän und Silizium insbesondere auch Bor, Titan, Zirkon, Niob, Wolfram, Eisen und/oder Yttrium enthalten.

Ein Mo - basierter Metall - Intermetall - Verbundwerkstoff, der für die vorliegende Erfindung eingesetzt werden kann, ist in der deutschen Patentanmeldung DE 102015214730.4 beschrieben, die hiermit durch Verweis vollständig mit aufgenommen wird.

Bei der Verwendung eines silizidverstärkten Metall - Intermetall - Verbundwerkstoffs und insbesondere einer silizidverstärkten Molybdän - Legierung für das Schaufelblatt und/oder den Schaufelfuß kann der Silizidanteil des Werkstoffs im Schaufelblatt 50 Vol.% und mehr umfassen, während der Silizidanteil im Schaufelfuß kleiner 50 Vol.% gewählt werden kann.

Statt eines abrupten Übergangs von dem Werkstoff des Schaufelfußes zum Schaufelblatt kann auch ein kontinuierlicher, gradierter Übergang eingestellt werden, sodass sich der Werkstoff allmählich in einem Übergangsbereich vom Schaufelfuß zum Schaufelblatt ändert. Darüber hinaus können auch mehrere kleine Stufenübergänge im Übergangsbereich zwischen Schaufelfuß und Schaufelblatt vorgesehen sein, um zwar keinen kontinuierlichen Übergang von dem Werkstoff des Schaufelfußes zum Schaufelblatt zu schaffen, aber die Änderungen der chemischen Zusammensetzung an den jeweiligen Stufen klein zu halten. Darüber hinaus kann auch ein beliebiger dritter Werkstoff zwischen dem Schaufelfuß und dem Schaufelblatt vorgesehen sein, wobei wiederum die Übergänge von dem Werkstoff des Schaufelfußes zu dem dritten Werkstoff und von dem dritten Werkstoff zu dem Stoff des Schaufelblatts kontinuierlich gradiert oder in ein oder mehreren Stufen vorgesehen sein kann. Ein dritter Werkstoff kann beispielsweise für ein Deckband zwischen Schaufelblatt und Schaufelfuß vorgesehen werden.

Zur Herstellung einer entsprechenden Schaufel für eine Strömungsmaschine mit unterschiedlichem Werkstoff in Schaufelfuß und Schaufelblatt können der erste Werkstoff für den Schaufelfuß einerseits und der zweite Werkstoff für das Schaufelblatt andererseits in Form von Pulvern oder Pulvermischungen oder als Festkörper bereitgestellt werden wobei die Schaufel dann durch Fügen von mindestens zwei Festkörpern oder durch Fügen eines Festkörpers mit einem Pulver oder einer Pulvermischung oder durch Fügen von mindestens zwei unterschiedlichen Pulvern oder Pulvermischungen hergestellt werden kann.

Werden mindestens zwei Festkörper aus unterschiedlichen Werkstoffen, die entsprechend die Bereiche des Schaufelfußes und des Schaufelblattes bilden sollen, bereitgestellt, kann das Fügen der Festkörper durch ein Schweiß verfahren, wie beispielsweise Reibschweißen, Diffusionsschweißen, Laserstrahlschweißen, Elektronenstrahlschweißen oder induktives Pressschweißen erfolgen.

Beim Fügen von Pulver oder einer Pulvermischung mit einem Festkörper oder beim Fügen von mindestens zwei unterschiedlichen Pulvern oder Pulvermischungen können generative Herstellverfahren zur lagenweisen Abscheidung von Pulverpartikeln eingesetzt werden, wie beispielsweise selektives Laserstrahlschmelzen, selektives Laserstrahlsintern, selektives Elektronenstrahlschmelzen, selektives Elektronenstrahlsintern, Laserauftragsschweißen und dergleichen. Bei diesen Verfahren wird entweder auf dem bereits vorher bereitgestellten Festkörper oder einer bereits vorher aus einem Pulver erzeugten Lage eine weitere Lage aus Pulver durch Verschmelzen oder Sintern der Pulverpartikel untereinander und mit dem darunter befindlichen Festkörper ein Körper aufgebaut, wobei durch Veränderung der chemischen Zusammensetzung der Pulver oder Pulvermischungen im Vergleich zu dem darunter befindlichen Festkörper oder dem bereits gefügten Pulver ein Übergang von einem Werkstoff, wie er im Schaufelfuß vorgesehen werden soll, zu einem anderen Werkstoff, wie er im Schaufelblatt vorgesehen werden soll, erzeugt werden kann.

Darüber hinaus können Pulverpartikel untereinander oder mit einem entsprechenden Festkörper in der Weise verbunden werden, dass eine Form oder Kapsel vorgesehen wird, in der das Pulver eingefüllt werden kann, wobei durch Verdichten und Verbinden der Pulverpartikel durch heißisostatisches Pressen, kaltisostatisches Pressen, Heißpressen, Sintern, Drucksintern und/oder Reaktionssintern ein entsprechender Körper zur Herstellung einer Schaufel mit zwei unterschiedlichen Werkstoffen erzeugt werden kann.

### KURZBESCHREIBUNG DER FIGUREN

Die beigefügten Zeichnungen zeigen in rein schematischer Weise in
- Fig. 1: eine perspektivische Darstellung einer Schaufel für ein Flugtriebwerk,
- Fig. 2: ein Ablaufdiagramm für eine erste Ausführungsform eines Herstellungsverfahrens für eine Schaufel,
- Fig. 3: ein Ablaufdiagramm für eine zweite Ausführungsform eines Herstellungsverfahrens für eine Schaufel,
- Fig. 4: ein Ablaufdiagramm für eine dritte Ausführungsform eines Herstellungsverfahrens für eine Schaufel und in
- Fig. 5: ein Ablaufdiagramm einer vierten Ausführungsform für ein Herstellungsverfahren einer Schaufel.

### AUSFÜHRUNGSBEISPIELE

Weitere Vorteile, Kennzeichen und Merkmale der vorliegenden Erfindung werden bei der nachfolgenden detaillierten Beschreibung der Ausführungsbeispiele deutlich, allerdings ist die Erfindung nicht auf diese Ausführungsbeispiele beschränkt.

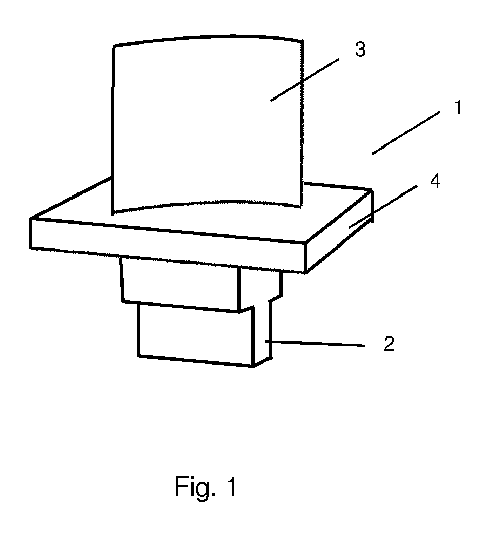

Die Figur 1 zeigt eine perspektivische Darstellung einer Schaufel 1, wie sie beispielsweise in den vorderen Stufen schnelllaufender Niederdruckturbinen als Laufschaufel eingesetzt werden können.

Die Schaufel 1 weist einen Schaufelfuß 2 auf, mit dem sie in eine Turbinenscheibe eingesetzt werden kann. Darüber hinaus umfasst die Schaufel 1 ein Schaufelblatt 3, das von den vorbeiströmenden Fluid beaufschlagt wird und zum Antrieb der Turbinenschaufel beiträgt.

Die Turbinenschaufel 1 weist zwischen dem Schaufelfuß 2 und dem Schaufelblatt 3 ein inneres Deckband 4 auf. Gemäß der Erfindung ist das Schaufelblatt 3 aus einem anderen Werkstoff gebildet als der Schaufelfuß 2, um den unterschiedlichen Anforderungen an das Schaufelblatt 3 und den Schaufelfuß 2 gerecht zu werden. Das innere Deckband 4 kann entweder aus dem Werkstoff des Schaufelblatts 3 oder dem Werkstoff des Schaufelfußes 2 oder aus einem dritten Werkstoff gebildet sein, der unterschiedlich zu den Werkstoffen des Schaufelfußes 2 und des Schaufelblatts 3 ist.

Gemäß der Erfindung kann der Schaufelfuß 2 aus geeigneten Hochtemperaturlegierungen, wie Molybdän - Legierungen, Nickel - Legierungen, Kobalt - Legierungen und insbesondere Nickelbasis - Superlegierungen bzw. Kobaltbasis - Superlegierungen gebildet sein. Darüber hinaus kann der Schaufelfuß 2 aus einem Metall - Intermetall - Verbundwerkstoff gebildet sein, bei dem die Metallmatrix insbesondere aus einer Molybdän - Legierung gebildet sein kann. Als intermetallische Phasen kann der entsprechende Metall - Intermetall - Verbundwerkstoff Silizide umfassen.

Die Molybdän - Legierung kann neben dem Hauptbestandteil Molybdän, der somit den größten Bestandteil an der Legierung ausmacht, Silizium, Bor, Titan, Eisen, Yttrium, Zirkon, Niob und Wolfram umfassen. Beispielsweise kann die Legierung 9 bis 15 at.% Silizium, 5 bis 12 at.% Bor, 18 bis 32 at.% Titan sowie Rest Molybdän umfassen, wobei die weiteren genannten Legierungselemente in geringeren Anteilen in der Legierung mit vorhanden sein können. Die Silizid - Phasen können durch (Mo, Ti)₅Si₃ und/oder (Mo, Ti)₅SiB₂ gebildet sein, wobei in den jeweiligen Siliziden Molybdän zumindest teilweise durch Titan ersetzt werden kann und umgekehrt.

Die Molybdän - Legierung kann 15 bis 35 Vol.% (Mo, Ti)₅Si₃ und 20 bis 40 Vol.% (Mo, Ti)₅SiB₂ umfassen, wobei für den Werkstoff des Schaufelfußes 2 der Gesamtanteil der Silizid - Phasen vorzugsweise unter 50 Vol.% gehalten wird.

Ein ähnlicher Werkstoff kann für das Schaufelblatt 3 Verwendung finden, wobei die entsprechenden Angaben für die chemische Zusammensetzung identisch sind. Die Zusammensetzung und die Wärmebehandlung wird jedoch so gewählt, dass der Silizidanteil ≥ 50 Vol.% ist, um dem Schaufelblatt eine höhere Kriechfestigkeit und bessere Oxidationsbeständigkeit zu verleihen, während der Schaufelfuß mit der vergleichbaren silizidverstärkten Molybdän - Legierung, jedoch einem Silizidanteil von < 50 Vol.% eine höhere Zugfestigkeit und ein höheres Dehnpotential aufweist.

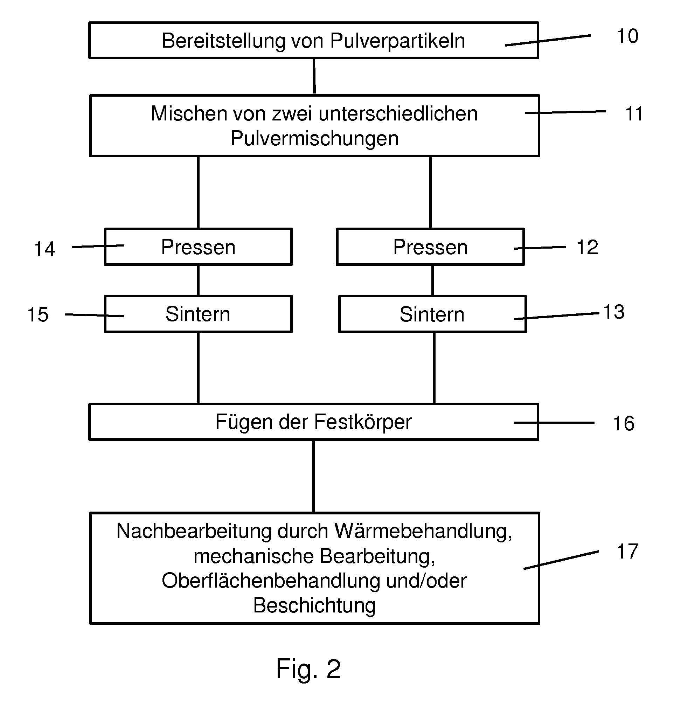

Die Turbinenschaufel 1, wie sie in Figur 1 gezeigt ist, kann durch verschiedene Herstellungsverfahren erzeugt werden, wobei entsprechende Ablaufdiagramme in den Figuren 2 bis 5 dargestellt sind.

Bei der Herstellung gemäß der Ausführungsform der Figur 2 werden zunächst Pulverpartikel bereitgestellt, mit denen die oben beschriebenen Molybdän - Legierungen mit Silizidverstärkung hergestellt werden können (Verfahrensschritt 10). Aus den Pulverpartikeln, die beispielsweise als reine Elementpartikel, Legierungspartikel, beschichtete Partikel und/oder Partikel aus intermetallischen Phasen und/oder chemischen Verbindungen gebildet sein können, werden zwei unterschiedliche Pulvermischungen gemischt (Schritt 11), mit denen die beiden unterschiedlichen Werkstoffe für den Schaufelfuß 2 und das Schaufelblatt 3 hergestellt werden können.

Die beiden unterschiedlichen Pulvermischungen werden in den Verfahrensschritten 12, 13, 14 und 15 separat voneinander zu getrennten Festkörpern verarbeitet, von denen der eine den Schaufelfuß 2 und der andere das Schaufelblatt 3 bilden werden.

Die beiden Festkörper werden im nachfolgenden Verfahrensschritt 16 miteinander verbunden, wobei verschiedene Schweißverfahren, wie Reibschweißen, Diffusionsschweißen, induktives Pressschweißen, Elektronenstrahlschweißen oder Laserschweißen eingesetzt werden können.

Nach dem Fügen der Festkörper aus unterschiedlichen Werkstoffen, wie einer silizidverstärkten Molybdän - Legierung mit einem hohen Silizidanteil und einer silizidverstärkten Molybdän - Legierung mit einem niedrigen Silizidanteil, kann der Fügekörper zur Bildung einer Turbinenschaufel 1 nachbearbeitet werden, wie beispielsweise durch mechanische Bearbeitung zur Formgebung, durch Wärmebehandlung zur Einstellung der gewünschten Gefüge sowie durch Oberflächenbehandlung und/oder Beschichtung zur Ausbildung der gewünschten Oberfläche (Verfahrensschritt 17).

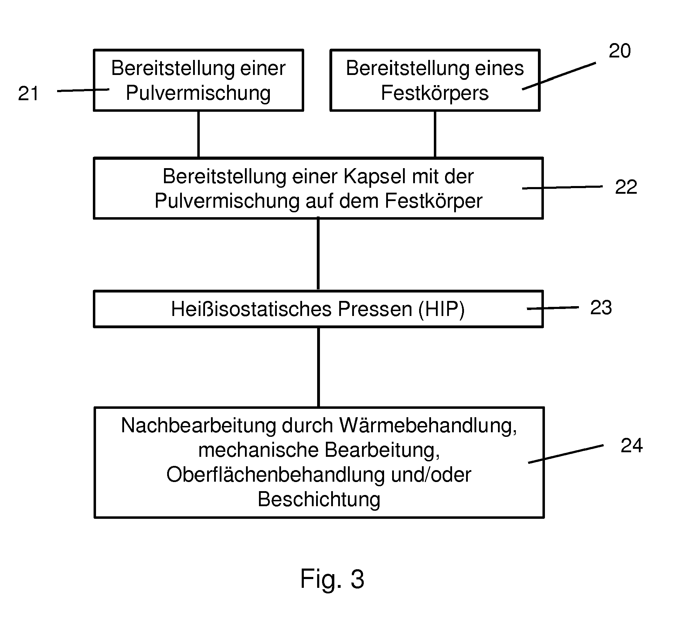

Die Figur 3 zeigt eine weitere Variante eines Herstellungsverfahrens, bei welchem im Schritt 20 bereits ein Festkörper aus einem der gewünschten Werkstoffe bereitgestellt wird. Beispielsweise könnte der Festkörper durch eine der Hochtemperaturlegierungen, die für den Schaufelfuß Verwendung finden kann, wie beispielsweise eine übliche Molybdän - Legierung oder eine Nickelbasis - Superlegierung bzw. eine Kobalt - Superlegierung pulvermetallurgisch oder gießtechnisch und gegebenenfalls nachfolgendes Schmieden hergestellt werden. Ein derartig hergestellter Festkörper kann im Schritt 22 mit einer Kapsel versehen werden, in die ein im Schritt 21 hergestellte Pulvermischung eingefüllt werden kann. Die im Schritt 21 hergestellte Pulvermischung ist so hergestellt, dass damit ein Werkstoff für das Schaufelblatt 3 erzeugt werden kann. Entsprechend ist auch die Kapsel, die an dem Festkörper im Schritt 22 befestigt wird, so ausgebildet, dass die eingefüllte Pulvermischung aus Schritt 21 durch das nachfolgende heißisostatische Pressen (HIP) im Schritt 23 zu einem Halbteil geformt wird, bei welchem die in der Kapsel aufgenommene Pulvermischung den Werkstoff für das Schaufelblatt 3 bildet. Damit wird ein Halbteil erzeugt, bei welchem ein Bereich für den Schaufelfuß mit einem ersten Werkstoff gebildet ist und ein weiterer Bereich für das Schaufelblatt mit einem zweiten Werkstoff, der unterschiedlich zum ersten Werkstoff ist. Das so erzeugte Halbteil kann im Schritt 24 entsprechend nachbearbeitet werden, wobei wiederum verschiedene Nachbearbeitungsmöglichkeiten zur Verfügung stehen, wie beispielsweise Formgebung durch mechanische Bearbeitung, Wärmebehandlung, Oberflächenbehandlung und/oder Beschichtung.

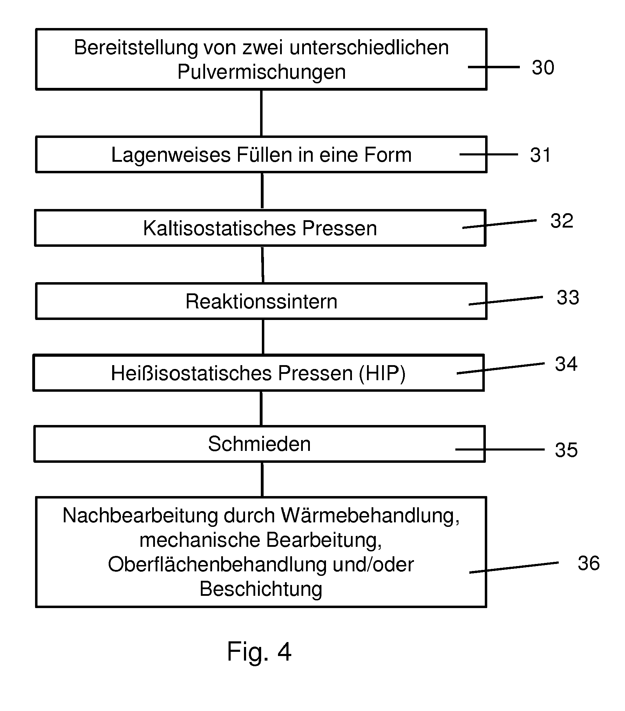

Die Figur 4 zeigt eine weitere Ausführungsform eines Herstellungsverfahrens, bei welchem im Verfahrensschritt 30 zwei unterschiedliche Pulvermischungen zur Herstellung der unterschiedlichen Werkstoffe für das Schaufelblatt 3 und den Schaufelfuß 2 bereitgestellt werden. Die beiden unterschiedlichen Pulvermischungen werden nacheinander in zwei Lagen in eine elastische Form gefüllt (Verfahrensschritt 31) um nachfolgend in den Verfahrensschritten 32 und 33 zunächst kalt isostatisch gepresst und anschließend beim Reaktionssintern zu einem Halbzeug gefügt zu werden. Nach dem Reaktionssintern in Verfahrensschritt 33 können sich zum Verdichten ein heißisostatisches Pressen im Verfahrensschritt 34 sowie eine thermomechanische Formung durch Schmieden im Verfahrensschritt 35 anschließen. Durch das Einfüllen der Pulvermischungen in zwei unterschiedlichen Lagen entsteht somit wiederum ein Halbzeug mit einem Bereich aus einem ersten Werkstoff und einem Bereich aus einem zweiten Werkstoff, sodass entsprechend mit den unterschiedlichen Bereichen eine Schaufel 1 mit einem Schaufelfuß 2 aus einem ersten Werkstoff und einem Schaufelblatt 3 aus einem zweiten Werkstoff gebildet werden können. Die Endbearbeitung kann im Verfahrensschritt 36 wiederum durch Wärmebehandlung, mechanische Bearbeitung, Oberflächenbehandlung und/oder Beschichtung erfolgen.

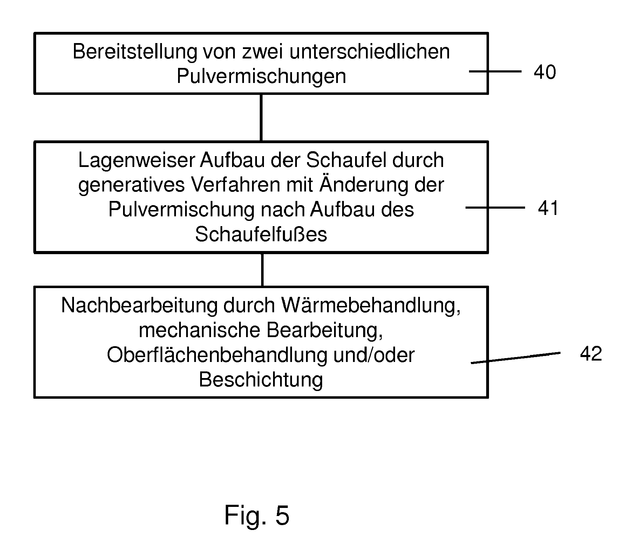

Die Figur 5 zeigt eine weitere Ausführungsform eines Herstellungsverfahrens für eine Turbinenschaufel, wie sie in Figur 1 dargestellt ist, wobei bei dieser Ausführungsvariante wiederum zwei unterschiedliche Pulvermischungen zur Herstellung der unterschiedlichen Werkstoffe für den Schaufelfuß 2 und das Schaufelblatt 3 bereitgestellt werden (Verfahrensschritt 40). Die beiden unterschiedlichen Pulvermischungen werden zur lagenweisen Herstellung der Schaufel durch ein generatives Verfahren eingesetzt, wobei zunächst die erste Pulvermischung zur Erzeugung des ersten Werkstoffs im Schaufelfuß 2 und anschließend die zweite Pulvermischung zur Erzeugung des Schaufelblatts 3 und des dort vorgesehenen zweiten Werkstoffs eingesetzt werden. Sollte die Schaufel nicht vom Schaufelfuß zum Schaufelblatt aufgebaut werden, sondern in einer anderen Richtung, kann natürlich statt einer zeitlich getrennten Verwendung der unterschiedlichen Pulvermischungen während des generativen Herstellungsverfahrens auch ein örtlich getrennter Einsatz der unterschiedlichen Pulvermischungen Anwendung finden, um getrennte Bereiche aus den beiden unterschiedlichen Werkstoffen zu bilden.

Als generative Herstellverfahren können beispielsweise selektives Laserstrahlschmelzen, selektives Laserstrahlsintern, Elektronenstrahlschmelzen oder Elektronenstrahlsintern sowie Laserstrahl- oder Elektronenstrahlauftragsschweißen Verwendung finden.

Bei den beschriebenen Herstellverfahren wurde bisher lediglich beschrieben, dass zwei getrennte Bereiche mit unterschiedlichen Werkstoffen zur Ausbildung des Schaufelfußes 2 und des Schaufelblatts 3 erzeugt werden. Selbstverständlich ist es jedoch auch möglich innerhalb des Schaufelfußes 2 und/oder des Schaufelblatts 3 die Werkstoffe zu variieren, um insbesondere einen gradierten, kontinuierlichen Übergang vom Schaufelfuß 2 zum Schaufelblatt 3 zu bewirken. Entsprechend können die vorgestellten Herstellverfahren entsprechend angepasst werden, um eine kontinuierliche Variation des Werkstoffs zu erzeugen. Bei den Verfahren, bei denen Pulver bzw. Pulvermischungen zur Erzeugung eines Bauteilbereichs eingesetzt werden kann dies einfach durch kontinuierliche Variation der Pulverzusammensetzung erzeugt werden.

Obwohl die vorliegende Erfindung anhand der Ausführungsbeispiele detailliert beschrieben worden ist, ist für den Fachmann selbstverständlich, dass die Erfindung nicht auf diese Ausführungsbeispiele beschränkt ist, sondern dass vielmehr Abwandlungen in der Weise möglich sind, dass einzelne Merkmale weggelassen oder andersartige Kombinationen von Merkmalen verwirklicht werden können, solange der Schutzbereich der beigefügten Ansprüche nicht verlassen wird. Die vorliegende Offenbarung schließt sämtliche Kombinationen der vorgestellten Einzelmerkmale mit ein.

### DEFINITIONEN

Unter Elementpartikel werden Pulverpartikel verstanden, die im Wesentlichen aus einem einzigen chemischen Element gebildet sind, während Legierungspartikel aus einer Legierung gebildet sind.

Unter Superlegierungen werden Legierungen verstanden, deren Einsatztemperatur in einem Temperaturbereich oberhalb der halben Schmelztemperatur der Legierung, insbesondere oberhalb 75 % der Schmelztemperatur der Legierung und vorzugsweise oberhalb 90 % der Schmelztemperatur der Legierung liegt.

### BEZUGSZEICHENLISTE

- 1: Turbinenschaufel
- 2: Schaufelfuß
- 3: Schaufelblatt
- 4: inneres Deckband
- 10 bis 42: Verfahrensschritte

## Patentansprüche

1. Schaufel für eine Strömungsmaschine, insbesondere für ein Flugtriebwerk, mit einem Schaufelfuß (2) zur Anordnung der Schaufel (1) in der Strömungsmaschine und einem Schaufelblatt (3) zur Wechselwirkung mit einem Fluid, welches durch die Strömungsmaschine fließt, wobei Schaufelfuß und Schaufelblatt aus unterschiedlichen Werkstoffen gebildet sind und wobei das Schaufelblatt aus einem Metall - Intermetall - Verbundwerkstoff gebildet ist,
**dadurch gekennzeichnet, dass**
die Metallmatrix, in der intermetallische Phasen zur Bildung des Metall - Intermetall - Verbundwerkstoffs eingelagert sind, aus einer Molybdän - Legierung gebildet ist.

2. Schaufel nach Anspruch 1,
**dadurch gekennzeichnet, dass**
der Schaufelfuß (2) aus einem Metall - Intermetall - Verbundwerkstoff gebildet ist, bei dem die Metallmatrix, in der intermetallische Phasen zur Bildung des Metall - Intermetall - Verbundwerkstoffs eingelagert sind, aus einer Molybdän - Legierung gebildet ist, wobei der Anteil der intermetallischen Phasen in dem Metall - Intermetall - Verbundwerkstoff im Vergleich zum Schaufelblatt (3) kleiner ist.

3. Schaufel nach Anspruch 1,
**dadurch gekennzeichnet, dass**
der Schaufelfuß (2) aus einer Legierung gebildet ist, die aus der Gruppe ausgewählt ist, die Nickel - Legierungen, Mo - Legierungen und Co - Legierungen umfasst.

4. Schaufel nach einem der vorhergehenden Ansprüche,
**dadurch gekennzeichnet, dass**
die intermetallischen Phasen Silizide sind.

5. Schaufel nach einem der vorhergehenden Ansprüche,
**dadurch gekennzeichnet, dass**
der Metall - Intermetall - Verbundwerkstoff des Schaufelblatts (3) einen Silizidanteil von größer oder gleich 50 Vol.% umfasst.

6. Schaufel nach Anspruch 2,
**dadurch gekennzeichnet, dass**
der Metall - Intermetall - Verbundwerkstoff des Schaufelfußes (2)eine Silizidanteil von kleiner als 50 Vol.% aufweist.

7. Schaufel nach einem der vorhergehenden Ansprüche,
**dadurch gekennzeichnet, dass**
der Übergang vom Werkstoff des Schaufelfußes (2) zum Werkstoff des Schaufelblattes (3) gradiert mit einem kontinuierlich verlaufenden Übergang oder gestuft mit einem oder mehreren sprunghaften Wechseln erfolgt.

8. Verfahren zur Herstellung einer Schaufel (1) für eine Strömungsmaschine, insbesondere nach einem der vorhergehenden Ansprüche, bei welchem ein erster Werkstoff für den Schaufelfuß (2) und ein zweiter Werkstoff für das Schaufelblatt (3) bereitgestellt werden, wobei der zweite Werkstoff unterschiedlich zum ersten Werkstoff ist,
**dadurch gekennzeichnet, dass**
der erste Werkstoff und der zweite Werkstoff in Form eines Pulvers oder einer Pulvermischung oder als Festkörper bereitgestellt werden und die Schaufel durch Fügen von mindestens zwei Festkörpern oder durch Fügen eines Festkörpers mit einem Pulver oder einer Pulvermischung oder durch Fügen von mindestens zwei unterschiedlichen Pulvern oder Pulvermischungen hergestellt wird.

9. Verfahren nach Anspruch 8,
**dadurch gekennzeichnet, dass**
das Fügen der Festkörper durch mindestens eines der Verfahren vorgenommen wird, die aus der Gruppe ausgewählt sind, die Schweißen, Reibschweißen, Diffusionsschweißen, Laserstrahlschweißen, Elektronenstrahlschweißen und induktives Pressschweißen umfasst.

10. Verfahren nach Anspruch 8,
**dadurch gekennzeichnet, dass**
das Fügen von Pulver oder einer Pulvermischung mit einem Festkörper durch generative Herstellverfahren zur lagenweisen Aufbringung von Pulverpartikeln oder durch Bereitstellung der Pulverpartikel in einer Form oder Kapsel auf dem Festkörper und Verdichten und Verbinden der Pulverpartikel untereinander und mit dem Festkörper durch mindestens eines der Verfahren aus der Gruppe erfolgt, die heißisostatisches Pressen, kaltisostatisches Pressen, Heißpressen, Sintern, Drucksintern und Reaktionssintern umfasst.

11. Verfahren nach Anspruch 8,
**dadurch gekennzeichnet, dass**
Fügen von mindestens zwei unterschiedlichen Pulvern oder Pulvermischungen durch generative Herstellverfahren zur lagenweisen Verbindung von Pulverpartikeln oder durch Bereitstellung der Pulverpartikel in einer Form oder Kapsel und Verdichten und Verbinden der Pulverpartikel untereinander durch mindestens eines der Verfahren aus der Gruppe erfolgt, die heißisostatisches Pressen, kaltisostatisches Pressen, Heißpressen, Sintern, Drucksintern und Reaktionssintern umfasst.
